# EUROPEAN PATENT APPLICATION

(11) **EP 2 610 848 A2**
(43) Date of publication of application: **03.07.2013**
(21) Application number: 12194921.8
(22) Date of filing: 29.11.2012
(51) Int. Cl.: G09G 3/34

(54) **Backlight providing apparatus, display apparatus and controlling method thereof**

(30) Priority: 28.12.2011 KR 20110145289; 30.12.2011 KR 20110147327; 20.04.2012 KR 20120041488
(71) Applicant: Samsung Electronics Co., Ltd., Gyeonggi-do 443-742 (KR)
(72) Inventor: Lim, Dae-sung, Gyeonggi-do (KR)
(74) Representative: Misselbrook, Paul

(57) **Abstract**

A backlight providing apparatus is provided. The backlight providing apparatus includes image analyzers which detect brightness property information of an image frame for each of content views; a light source which provides a backlight to a display panel; a backlight driver which drives the light source; and a controller which controls the backlight driver to provide a backlight corresponding to the detected brightness property information for each of the plurality of content views.

## Description

### CROSS-REFERENCE TO RELATED APPLICATIONS

This application claims priority from Korean Patent Application No. 10-2011-0145289, filed in the Korean Intellectual Property Office on December 28, 2011, Korean Patent Application No. 10-2011-0147327, filed in the Korean Intellectual Property Office on December 30, 2011, and Korean Patent Application No. 10-2012-0041488, filed in the Korean Intellectual Property Office on April 20, 2012, the disclosures of which are incorporated herein by reference.

### BACKGROUND

### 1. Field

Apparatuses and methods consistent with exemplary embodiments relate to a backlight providing apparatus, a display apparatus, and a controlling method thereof, and more particularly, to a backlight providing apparatus which provides a backlight with respect to a plurality of contents, a display apparatus and a controlling method thereof.

### 2. Description of the Related Art

With the development of electronic technology, various types of electronic products have been developed and provided. In particular, various display apparatuses such as a television, a mobile phone, a personal computer (PC), a notebook PC, and a personal digital assistant (PDA) have been widely used in household.

As such display apparatuses have been widely used, user needs for various functions have also increased. Accordingly, manufacturers have made an effort to meet such user needs by providing products with new functions such as providing three-dimensional (3D) contents.

In this context, a display apparatus which enables a plurality of users to watch different contents by providing a plurality of contents simultaneously has been developed. However, in this case, if a single signal processing unit is used for a plurality of contents as in the prior art display apparatus, problems may occur with respect to image processing.

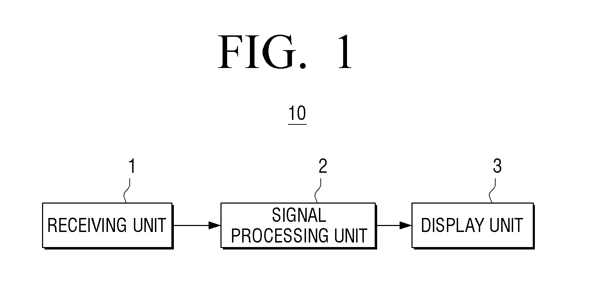

FIG. 1 is a block diagram illustrating configuration of a related art display apparatus having a single signal processing unit.

Referring to FIG. 1, the display apparatus 10 includes a receiving unit 1, a signal processing unit 2, and a display unit 3. The receiving unit 1 receives contents and the signal processing unit 2 forms an image frame regarding the received contents which is displayed through the display unit 3.

In order to display a plurality of contents which are provided simultaneously, the display unit 3 needs to dispose the image frames of a plurality of contents alternately. However, while the signal processing unit 2 processes the image frames, in particular, in the process of converting the frame rates of the contents, neighboring contents may affect each other, preventing optimal image processing.

Specifically, a frame rate is converted by generating a new image frame between consecutive image frames, and the new image frame is generated by calculating an intermediate value by interpolating each corresponding pixel value from the previous and the next image frames. In this process, if the image frame of other contents exists in the previous and the next image frames, an optimal image frame cannot be generated due to the effect of the image frame of other contents.

In addition, if a plurality of contents are provided simultaneously using such a display apparatus and a backlight is provided by analyzing a plurality of image frames at the same time as in the related art display apparatus, optimal brightness required for each image frame may not be provided due to the effect of the image frame of neighboring contents in the filtering process which is performed to change brightness of image frames gradually.

For example, if the image frames of contents A and contents B including a day image and a night image are processed through a single image analyzing unit, the image frame of contents A including the day image may be represented darker than expected as it is affected by the image frame of neighboring contents B including the night image and vice versa.

### SUMMARY

One or more exemplary embodiments provide a plurality of contents to a user which may perform an optimal image processing without any effect from other contents and a controlling method thereof.

One or more exemplary embodiments also provide a backlight providing apparatus which provides a backlight of optimal brightness for each of a plurality of contents, a controlling method thereof, and a display apparatus comprising such a backlight providing apparatus.

According to an aspect of an exemplary embodiment, there is provided a backlight providing apparatus including a plurality of image analyzers which detect brightness property information of an image frame for each of a plurality of content views; a light source which provides a backlight to a display panel; a backlight driver which drives the light source; and a controller which controls the backlight driver to provide a backlight corresponding to the detected brightness property information for each of the plurality of content views.

The controller may determine a duty ratio for each of the plurality of content views using brightness property information of the respective image frames and may control the backlight driver to drive the light source in accordance with the determined duty ratio.

Each of the plurality of image analyzers may detect an average brightness value of each pixel constituting the respective image frame of the contents as the brightness property information.

According to an aspect of another exemplary embodiment, there is provided a method for controlling a backlight providing apparatus, the method including for a plurality of contents which are combined by image frame, dividing image frames of each of the plurality of contents into content views and detecting brightness property information of an image frame of the respective content views; and providing a backlight corresponding to the detected brightness property information for each content view.

The providing a backlight may include determining a duty ratio for each of the plurality of contents using brightness properties information of the respective image frame, generating a driving signal having the determined duty ratio, and providing the backlight by applying the driving signal to a backlight unit.

The brightness property information of the image frame may comprise an average brightness value of pixels constituting the image frame.

According to an aspect of another exemplary embodiment, there is provided a display apparatus including a plurality of receivers which receive respective ones of a plurality of contents; a plurality of signal processors which correspond respectively to the receivers, each of the signal processors composing an image frame by processing corresponding respective ones of the plurality of the received contents; a multiplexer which multiplexes the image frames composed by the signal processors; a panel which displays the multiplexed image frame; a data divider which divides image frames of the plurality of contents provided to the panel into a plurality of content views; a plurality of image analyzers which detect brightness property information of image frames of respective ones of the content views; a backlight which provides a backlight to the panel; and a controller which controls the backlight to display each of the plurality of content views in synchronization with a backlight corresponding to brightness property information of image frames of the respective content view.

The controller may determine a duty ratio for each of the plurality of content views using brightness property information of the respective image frames and may control the backlight driver to drive the light source in accordance with the determined duty ratio.

Each of the plurality of image analyzers may detect an average brightness value of each pixel constituting an image frame of the contents as the brightness properties information of the image frame.

Each of the plurality of signal processors may include a decoder which performs decoding with respect to image data included in received contents, a scaler which performs scaling with respect to the decoded image data, and a frame rate converter which converts a frame rate of the image data.

According to an aspect of another exemplary embodiment, there is provided a display method for providing a plurality of contents to a plurality of users, the method including receiving each of a plurality of contents; composing an image frame by processing each of the received contents; and combining the composed image frames and outputting the image frames..

The composing an image frame may include performing decoding with respect to image data included in the received contents, performing scaling with respect to the decoded image data, and converting a frame rate of the image data.

### BRIEF DESCRIPTION OF THE DRAWINGS

These above and/or other aspects will become apparent and more readily appreciated from the following description of exemplary embodiments, taken in conjunction with the accompanying drawings, of which:

FIG. 1 is a block diagram illustrating configuration of a related art display apparatus having a single signal processor;

FIG. 2A is a view to explain a method for providing a plurality of two-dimensional (2D) contents according to an exemplary embodiment;

FIG. 2B is a view to explain a method for providing a plurality of 3D contents according to an exemplary embodiment;

FIG. 3 is a block diagram illustrating a display apparatus according to an exemplary embodiment;

FIG. 4 is a block diagram to explain a specific configuration of a signal processor according to an exemplary embodiment;

FIG. 5 is a block diagram illustrating configuration of a backlight providing apparatus according to an exemplary embodiment;

FIG. 6 is a view to explain an operation of a plurality of image analyzers according to an exemplary embodiment;

FIG. 7 is a view to explain an operation of a backlight driver and a controller according to an exemplary embodiment;

FIG. 8 is a block diagram illustrating configuration of a display apparatus according to an exemplary embodiment;

FIG. 9 is a flowchart illustrating a method for controlling a display apparatus according to an exemplary embodiment; and

FIG. 10 is a flowchart illustrating a method for providing a backlight according to an exemplary embodiment.

### DETAILED DESCRIPTION

Reference will now be made in detail to the exemplary embodiments, examples of which are illustrated in the accompanying drawings, wherein like reference numerals refer to like elements throughout. The exemplary embodiments are described below, in order to explain the present inventive concept by referring to the figures.

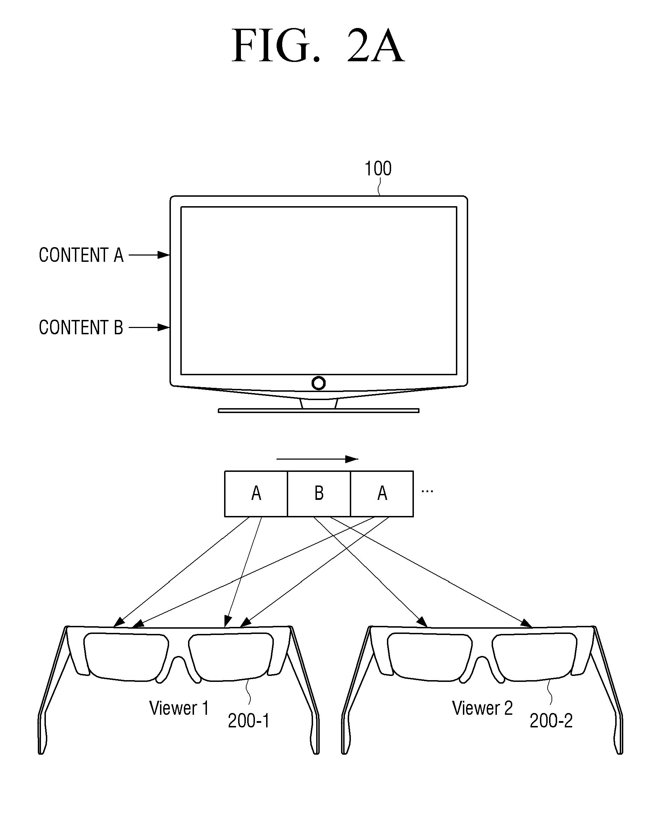

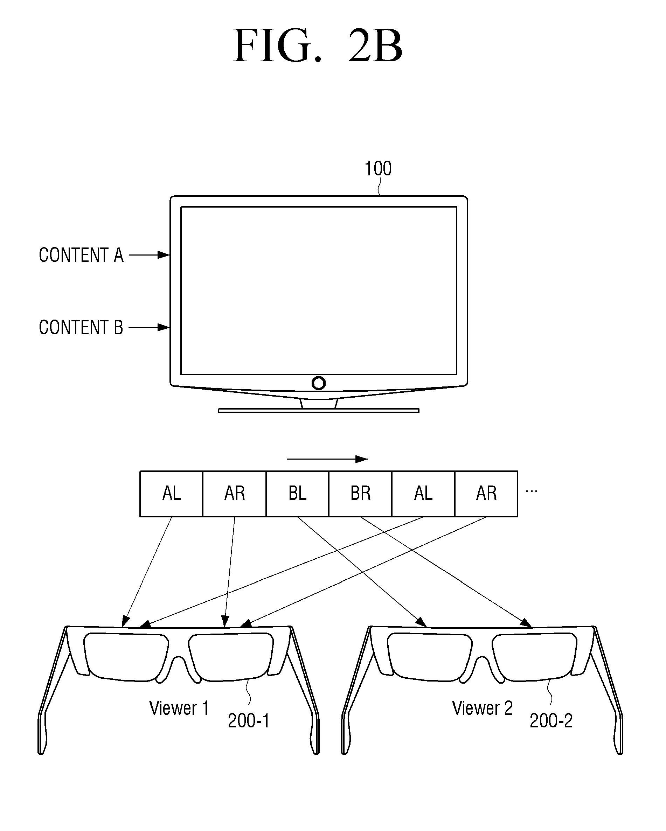

FIGS. 2A and 2B are views illustrating configuration of a content providing system according to an exemplary embodiment. As illustrated in FIGS. 2A and 2B, the content providing system comprises a display apparatus 100 and a glasses apparatus 200.

FIG. 2A is a view to explain a method for providing a plurality of 2D contents according to an exemplary embodiment.

The display apparatus 100 displays a plurality of 2D contents (for example, contents A and contents B) alternately on a plurality of contents views (for example, content view 1 and content view 2) and generates and transmits a sync signal to synchronize corresponding glasses 200-1 of Viewer 1 and glasses 200-2 of Viewer 2) with respective content view 1 and content view 2.

In this case, the glasses 200-1 may operate to open both left shutter glasses and right shutter glasses when the content A or the content B is displayed. Accordingly, a Viewer 1 wearing the glasses 200-1 may view only content A displayed on content view A which is synchronized with the glasses 1 (200-1) from among a plurality of contents A and B which are displayed alternately. Likewise, Viewer 2 wearing the glasses 200-2 may view only content B.

FIG. 2B is a view to explain a method for providing a plurality of 3D contents according to an exemplary embodiment.

As illustrated in FIG. 2B, if a plurality of 3D contents (contents A and contents B) are 3D contents, the display apparatus 100 may display a left eye image and a right eye image of each 3D content while displaying the plurality of 3D contents alternately.

For example, the display apparatus 100 may display a left eye image AL and a right eye image AR of 3D content A, and display a left eye image BL and a right eye image BR of 3D content B alternately. In this case, the glasses 200-1 which is synchronized with content view 1 may open left eye glass at a time when the left eye image AL of 3D content A is displayed and open the right eye glass at a time when the right eye image AR of 3D content A is displayed and the glasses 200-2 which is synchronized with 3D content view 2 may open left eye glass at a time when the left eye image BL of 3D content B is displayed and open the right eye glass at a time when the right eye image BR of 3D content B is displayed.

Accordingly, the Viewer 1 wearing the glasses 200-1 views only 3D content A and Viewer 2 wearing the glasses 200-2 views only 3D content B.

Herein, the content view denotes a group of image frames of a single content which can be viewed by a viewer wearing a glasses apparatus when image frames of each content are disposed and displayed alternately. However, the content view is different from each content. For example, if the Viewer 1 wearing the glasses 200-1 which is synchronized with content view 1 changes a television channel while watching content A, or watches content C by reproducing other DVD contents, content A is changed to C, but the content view 1 is not changed. That is, the content view is a higher level of concept than that of a content, and is a kind of a channel for watching a content.

The display apparatus 100 and the glasses apparatus 200 may perform communication using various wireless communication technologies such as Wifi, Bluetooth, Infrared Data Association (IRDA), Radio Frequency (RF), IEEE 802.11, WLAN, HR WPAN, UWB, and LR WPAN.

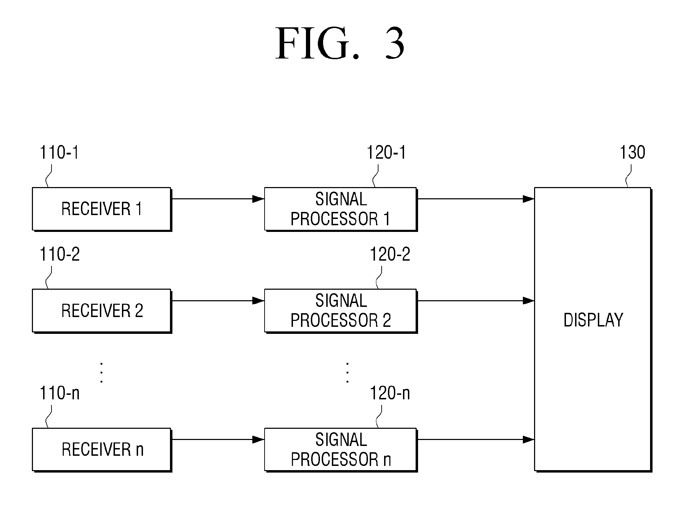

FIG. 3 is a block diagram illustrating a display apparatus according to an exemplary embodiment.

According to FIG. 3, the display apparatus 100 comprises a plurality of receivers 110-1, 110-2, ..., 110-n, a plurality of signal processors 120-1, 120-2, ..., 120-n, and a display 130. The display apparatus 100 may be realized as various apparatuses having a display, such as a television, a mobile phone, a PDA, a notebook PC, a monitor, a tablet PC, an electronic book, an electronic album, and a kiosk.

The plurality of receivers 110-1, 110-2, ..., 110-n receives a plurality of contents respectively. Specifically, each receiver 110-1, 110-2, ..., 110-n receives contents from a broadcast station transmitting broadcast program contents using a broadcast network or a web server transmitting content files using the Internet. In addition, the display apparatus 100 may receive contents from various recording medium reproduction apparatuses within the display apparatus 100 or connected to the display apparatus 100. The recording medium reproduction apparatus refers to an apparatus which reproduces contents stored in various types of recording media such as, for example, a CD, a DVD, a hard disk, a Blu-ray disk, a memory card, a USB memory, etc.

In the case where contents are received from a broadcast station, the plurality of receivers 110-1, 110-2, ..., 110-n may be configured to include a tuner (not shown), a demodulator (not shown), and an equalizer (not shown). Alternatively, in the case where contents are received from a source such as a web server, the plurality of receivers 110-1, 110-2, ..., 110-n may be realized as a network interface card (not shown). In a case where contents are received from the various types of recording medium reproduction apparatuses, the plurality of receivers 110-1, 110-2, ..., 110-n may be realized as an interface unit (not shown) physically and/or electrically connected to the recording medium reproduction apparatuses. As such, the plurality of receivers 110-1, 110-2, ..., 110-n may be realized as various forms depending on exemplary embodiments.

The plurality of receivers 110-1, 110-2, ..., 110-n need not necessarily receive contents from the same type of source, and may receive contents from different types of sources. For example, the receiver 1 (110-1) may be configured to include a tuner, a demodulator, and an equalizer, and the receiver 2 (110-2) may be realized as a network interface card.

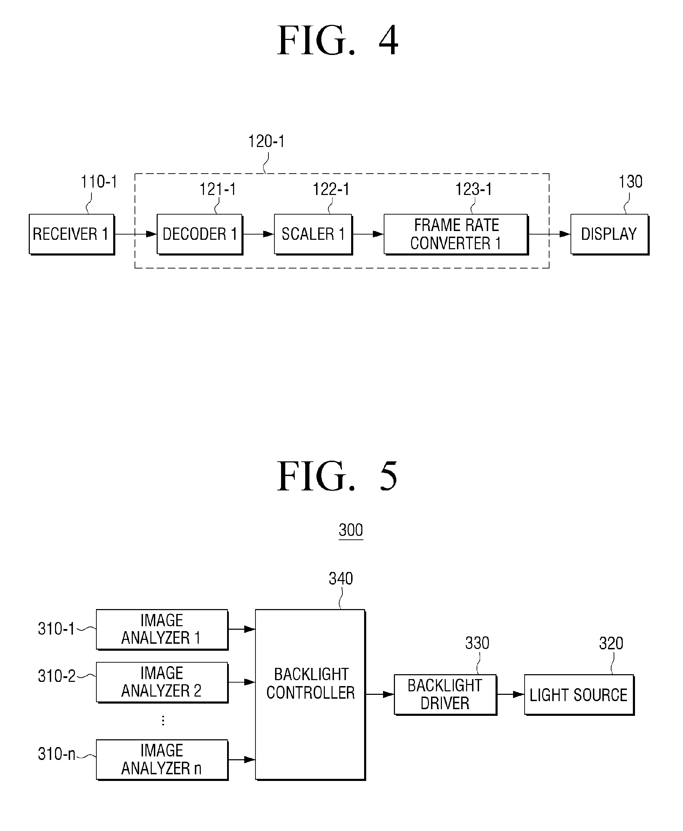

The plurality of signal processors 120-1, 120-2, ..., 120-n may compose an image frame by processing received contents respectively. The signal processor 120 will be explained in greater detail with reference to FIG. 4.

FIG. 4 is a block diagram to explain a specific configuration of a signal processor according to an exemplary embodiment.

As illustrated in FIG. 4, the signal processor 1 (120-1) comprises a decoder 1 (121-1), a scaler unit (122-1), and a frame rate converter 1 (123-1). Although only one signal processor 1 (120-1) is illustrated in FIG. 2, other signal processors 120-1, ..., 120-n may be realized to have the same configuration illustrated in FIG. 4.

The decoder 1 (121-1) performs decoding with respect to image data included in contents received from the receiver 1 (110-1). The scaler unit 1 (122-1) performs scaling with respect to the decoded image data. Specifically, the scaler unit 1 (122-1) may perform up or down scaling in accordance with a screen size of the display 130.

The frame rate converter 1 (123-1) converts a frame rate of contents provided by the scaler unit 1 (122-1) to fit an output rate of the display apparatus 100. For example, if the display apparatus 100 operates in 60 Hz in a single view mode, the frame rate converter 1 (123-1) may convert frame rates of each content to 60 Hz to be consistent with the frame rate of the single view mode. If the number of contents is 'n' in a multi-view mode, the display apparatus 100 operates in the output rate of n*60 Hz.

The method of converting a frame rate is the same as that used in a general display apparatus and is known to those skilled in the related art. Thus, the method will be explained only briefly.

In general, a movie film has a frame rate of 24 Hz. In order to output this movie film in a display apparatus having the output rate of 60 Hz, 2-3 pull down is performed. The 2-3 pull down denotes converting two image frames of the movie film into 2 and 3 image frames, that is, 5 image frames.

A new image frame may be generated by interpolating the existing image frame. As described above, if the above process is performed using a single signal processor, interpolation is performed with respect to different contents and thus, a new image frame having an appropriate value cannot be generated. However, if received contents are processed using different signal processors, frame rate conversion may be performed by generating an appropriate image frame without being effected by other contents.

Returning to FIG. 4, the signal processor 1 (120-1) may convert image data to have an image format corresponding to the frame rate converter 1 (123-1). Specifically, if input image data has a top-to-bottom format, and the frame rate converter 1 (122-1) has a side-by-side format to process a frame, the signal processor 1 (121-1) may convert the image data to have the side-by-side format by connecting the image frames of each content in a horizontal direction.

The display 130 combines and displays image frames of each content composed by the plurality of signal processors 120-1, 120-2, ..., 120-n. Specifically, the display 130 multiplexes and displays image frames of each content provided by the plurality of signal processors 120-1, 120-2, ..., 120-n so that at least one of the image frames is disposed alternately. In some cases, the display 130 may perform up or down scaling in accordance with a screen size of image frames for each content.

For example, if a display apparatus uses a shutter glasses method, the display 130 displays image frames such that at least one of the image frame of the first content, the image frame of the second content,... and the image frame of the nth content is disposed alternately. A user wears the glasses apparatus 200 which is interlocked with the time when the content is displayed in the display 130 to view a desired content. Specifically, the glasses apparatus 200 comprises left eye shutter glasses and right eye shutter glasses. The left eye shutter glasses and the right eye shutter glasses open/close alternately when 3D content is viewed. However, as described above, when a frame of a 2D image where at least one of each image frame is disposed alternately is viewed, the left eye shutter glasses and the right eye shutter glasses open/close all together in accordance with an output timing of the content which is synchronized with the glasses apparatus. Accordingly, a user may view 2D content independently from other users.

As described above, a mode where frame images of each content are disposed alternately and displayed may be referred to as a multi-view mode (or dual-view mode). In a general mode (or a single view mode) in which one of 2D content and 3D content is displayed, the display apparatus 100 may process the content by activating only one of the plurality of receivers 110-1, 110-2, ..., 110-n). If a user selects a multi-view mode in a general mode, the display apparatus 100 may process data as described above by activating other receivers.

The above-mentioned content may be 2D content or 3D content. The 3D content represents a content which provides a stereoscopic sense to a user by using a plurality of images which represent the same object from different viewpoints.

If a plurality of 3D contents are used, the display 130 may multiplex left eye images and right eye images included in each 3D content provided by a plurality frame rate converters (122-1, 122-2, ..., 122-n) in a predetermined disposition form so that they are disposed alternately with respect to the image frames of other contents.

Accordingly, the left eye image of the first content, the right eye image of the first content, the left eye image of the second content, the right eye image of the second content, ..., the left eye image of the nth content, and the right eye image of the nth content are disposed and displayed alternately, and a user recognizes the left eye image and the right eye image of one content through the glasses apparatus 200.

Although not illustrated in FIG. 3, the display apparatus 100 further comprises configuration where audio data included in each content is provided differently for each user in a multi-view mode. That is, the display apparatus 100 may further comprise a demultiplexer (not shown) for separating image data and audio data from contents received from each receiver 110-1, 110-2, ..., 110-n, an audio decoder (not shown) for decoding the separated audio data, a modulator (not shown) for modulating each of the decoded audio data to different frequency signals, and an output unit (not shown) for transmitting each of the modulated audio to glasses apparatus. Each audio data output from the output unit is provided to a user through an output unit such as an earphone or speaker in the glasses apparatus.

In addition, the display apparatus 100 may further include not only the plurality of receivers 110-1, 110-2, ..., 110-n, the plurality of signal processors 120-1, 120-2, ..., 120-n, the display 190, but also a controller (not shown), a sync signal generator (not shown) and an interface (not shown).

The controller (not shown) controls overall operations of the display apparatus 100. That is, the controller may control the plurality of receivers 110-1, 110-2, ..., 110-n, the plurality of signal processors 120-1, 120-2, ..., 120-n, the display 130, the sync signal generator, and the interface to perform corresponding operations.

The sync signal generator (not shown) generates a sync signal which synchronizes a glasses apparatus corresponding to each content in accordance with a display timing of each content. That is, the sync signal generator generates a sync signal to open shutter glasses of the glasses apparatus at a time when an image frame of each content is displayed in a multi-view mode.

The interface (not shown) performs communication with a glasses apparatus. In this case, the interface may perform communication with a glasses apparatus according to various wireless methods and transmit a sync signal to the glasses apparatus.

For example, the interface comprises a Bluetooth communication module to perform communication with a glasses apparatus, and may generate a sync signal as a transmission stream according to Bluetooth communication standard and transmit the sync signal to the glasses apparatus.

The transmission stream includes time information to open/close shutter glasses of the glasses apparatus by being synchronized with a display timing of contents. Specifically, the time information includes information regarding the time for left shutter open offset, left shutter close offset, right shutter open offset, and right shutter close offset.

The offset time is information of time delay from a reference point of time set for each content to open/close point of time of shutter glasses. That is, if the offset time elapses from a reference point of time, the glasses apparatus opens/closes left eye shutter glasses and right eye shutter glasses.

For example, the reference point of time may be a point of time when a vertical sync signal (that is, a frame sync) is generated in an image frame, and information regarding the reference point of time may be included in a transmission stream. In addition, a transmission stream may include information regarding a clock signal used in the display apparatus 100. Accordingly, if a transmission stream is received, the glasses apparatus may synchronize its own clock signal with a clock signal of the display apparatus 100 and determine whether the offset time elapses from a point of time when a vertical sync signal is generated using a clock signal to open/close shutter glasses.

In addition, a transmission stream may further include information regarding frequency of a frame sync and if the frequency of a frame sync has a decimal point, information regarding the decimal point.

The interface performs paring according to a Bluetooth communication method by transmitting/receiving a Bluetooth device address and a pin code to/from a glasses apparatus.

Once paring is completed, the interface may register information regarding the glasses apparatus such as identification information regarding the glasses apparatus. The interface matches information regarding each glasses apparatus with a transmission stream corresponding to a display timing of each content and transmits the transmission stream to each glasses apparatus based on the information obtained by the paring.

Once the transmission stream is received, the glasses apparatus checks whether the transmission stream corresponds to the information of the glasses apparatus and may open or close the glasses based on time information included in the transmission stream.

In the above exemplary embodiment, the interface and the glasses apparatus perform communication according to a Bluetooth communication method, but this is only an example. That is, not only the Bluetooth method but also other communication methods such as an infrared ray communication and Zigbee can be used, and communication may be performed according to various communication methods which enable transmission/reception of signals by forming a short-distance communication channel.

According to the above exemplary embodiment, even if a plurality of users view a plurality of contents, images of each content may be processed optimally without any effect from other contents and thus, the users may view optimal images.

In a case where a plurality of contents are provided simultaneously according to the above-described exemplary embodiment, if a backlight is provided by analyzing a plurality of image frames simultaneously, filtering is performed to change brightness of each image frame gradually. In this case, optimal brightness for each image frame is difficult to achieve due to the effect from an image frame of adjacent contents during the filtering process. The backlight providing apparatus according to the exemplary embodiment is conceived to address such a disadvantage.

FIG. 5 is a block diagram illustrating configuration of a backlight providing apparatus according to an exemplary embodiment.

According to FIG. 5, a backlight providing apparatus 300 comprises a plurality of image analyzers 310-1, 310-2, ..., 310-n, a light source 320, a backlight driver 330, and a backlight controller 340.

The plurality of image analyzers 310-1, 310-2, ..., 310-n detect brightness property information of image frames for each content view. Specifically, each of the image analyzers 310-1, 310-2, ..., 310-n receives image frames which are divided for each content view and detects brightness property information with respect to the received image frames. Accordingly, the number of image analyzers may differ according to the number of displayed content views.

The plurality of image analyzers 310-1, 310-2, ..., 310-n may detect an average brightness value of each pixel constituting image frames of contents as brightness property information. The average brightness value denotes an average brightness value of each pixel.

The brightness property information is not limited to an average brightness value but may also be various values such a maximum value, a minimum value, a median value, and a mode from among brightness values of each pixel.

In addition, each of the image analyzers 310-1, 310-2, ..., 310-n may include a filter (not shown) that filters a backlight so that the backlight which is provided to each image frame may change gradually. The filter (not shown) included in each of the image analyzers 310-1, 310-2, ..., 310-n may perform filtering without any effect from image frames of other content views.

The light source 320 provides a backlight to a display panel (not shown). The light source 320 may be realized as, for example, a Light Emitting Diode (LED-BLU), Cold Cathode Fluorescence Lamp (CCFL), or External Electrode Fluorescence Lamp (EEFL).

The light source 320 provides a backlight to the display panel (not shown) from the opposite side of the display panel (not shown), that is, the opposite side of the side where an image is displayed.

The backlight driver 330 drives the light source 320 under the control of the backlight controller 340. Specifically, the backlight driver 330 drives the light source 320 by generating a driving signal under the control of the backlight controller 340. The driving signal may be generated such that brightness of a screen may be changed as turn-on and turn-off time of the light source 320 is adjusted.

The backlight controller 340 controls the backlight driver 330. The backlight controller 340 controls the backlight driver 330 so that a backlight corresponding to brightness property information of each image frame detected by the plurality of image analyzers 310-1, 310-2, ..., 310-n is provided for each of a plurality of content views.

In addition, the backlight controller 340 may control overall operations of the backlight providing apparatus 300. Specifically, the controller 340 may control each of the plurality of image analyzers 310-1, 310-2, ..., 310-n and the backlight driver 330 so that corresponding operations may be performed.

In addition, the backlight controller 340 determines a duty ratio for each of a plurality of content views using brightness property information of each image frame and controls the backlight driver 330 to apply a driving signal to a light source unit in accordance with the determined duty ratio.

For example, if brightness property information of each detected image has a high value, a high duty ratio may be set. When a high duty ratio is set, a backlight driving time provided to a corresponding image frame becomes longer and thus, a user may view a brighter image frame. On the other hand, if brightness property information of each detected image has a low value, a low duty ratio may be set. When a low duty ratio is set, a backlight driving time provided to a corresponding image frame becomes shorter and thus, a user may view a darker image frame.

The duty ratio denotes a time ratio indicating time during which electric current flows versus a time during which electronic current does not flow with respect to a cycle of a pulse signal. That is, in the case of a driving signal which is represented as a pulse signal, a pulse signal of one cycle is time for outputting one image frame and a time ratio indicating time for turning off a light source versus time for turning on a light source while one image frame is output.

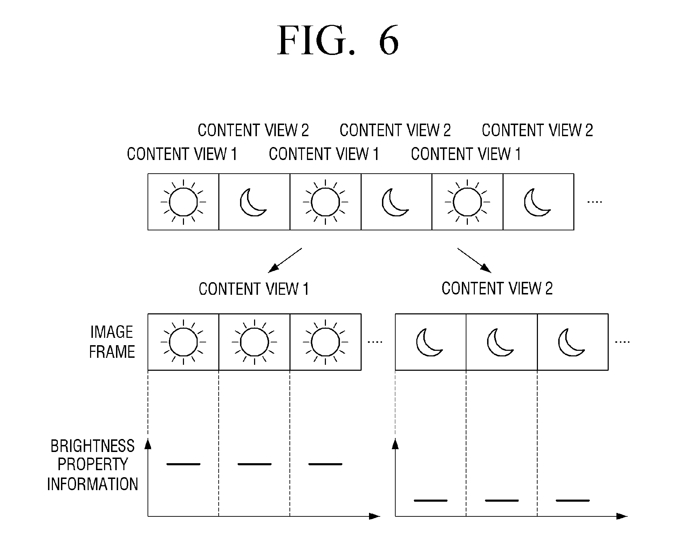

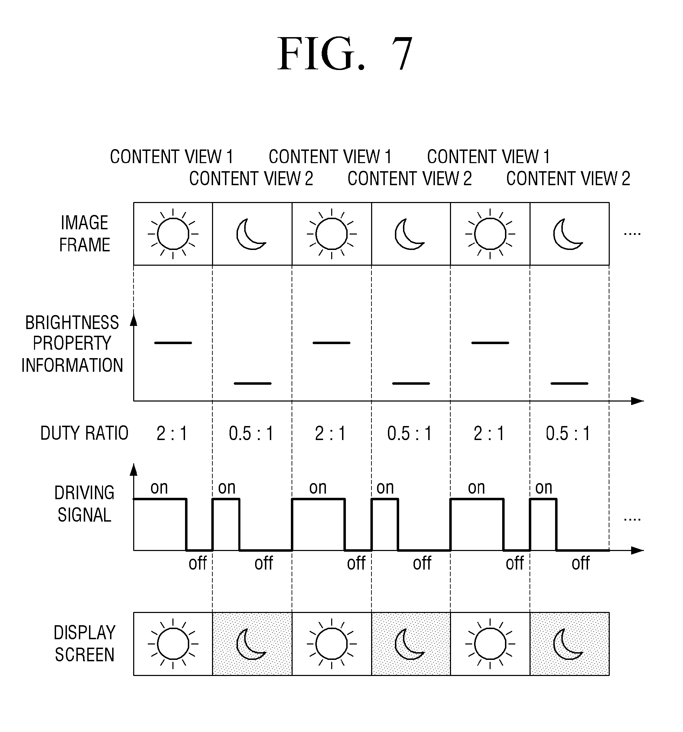

A backlight providing apparatus according to an exemplary embodiment will be explained in greater detail with reference to FIGS. 6 and 7.

FIG. 6 is a view to explain an operation of a plurality of image analyzers according to an exemplary embodiment.

Referring to FIG. 6, contents corresponding to a day image and a night image are displayed on content view 1 and content view 2, respectively. In this exemplary embodiment, only the image analyzer 1 (310-1) and the image analyzer 2 (310-2) from among the plurality of image analyzers 310-1, 310-2, ..., 310-n will be explained as examples since there are only two content views in this exemplary embodiment. However, the number of content views is not particularly limited. The image frame of contents corresponding to a day image which is displayed on content view 1 is input to the image analyzer 1 (310-1), and the image frame of contents corresponding to a night image which is displayed on content view 2 is input to the image analyzer 2 (310-2).

The image analyzer 1 (310-1) and the image analyzer 2 (310-2) detect brightness property information of each of the input image frames of the contents. As described above, the brightness property information may be an average value, a maximum value, a minimum value, a median value, or a mode from among brightness values of each pixel. In this exemplary embodiment, the brightness property information is assumed to be an average brightness value for convenience of explanation.

The image analyzer 1 (310-1) detects a brightness value of each pixel from the image frame of contents corresponding to a day image and detects an average brightness value using the brightness value of each pixel. As illustrated in FIG. 6, the average brightness value of the image frame corresponding to a day image may be higher than the average brightness value of the image frame corresponding to a night image.

The image analyzer 2 (310-2) detects a brightness value of each pixel from the image frame of contents corresponding to a night image and detects an average brightness value using the brightness value of each pixel. As illustrated in FIG. 6, the average brightness value of the image frame corresponding to a night image may be lower than the average brightness value of the image frame corresponding to a day image.

FIG. 7 is a view to explain an operation of a backlight driver and a controller according to an exemplary embodiment.

The backlight controller 340 determines a duty ratio of each image frame for each content, that is, content view 1 and content view 2, using an average brightness value detected from the image analyzer 1 (310-1) and the image analyzer 2 (310-2), respectively. As illustrated in FIG. 7, each image frame of content view 1 has a high average brightness value and thus, may be determined to have a relatively high duty ratio of 2:1, and each image frame of content view 2 has a low average brightness value and thus, may be determined to have a relatively low duty ratio of 0.5:1.

Once the duty ratio is determined, the backlight controller 340 controls the backlight driver 330 to generate a driving signal according to the determined duty ratio. Specifically, the backlight controller 340 may control the backlight driver 330 to generate a driving signal to drive a light source in accordance with a display timing of each image frame of contents to be displayed on content view 1 and content view 2 according to the determined duty ratio of each image frame. The driving signal of FIG. 5 denotes to a driving signal which is generated according to a determined duty ratio. It can be seen that the section corresponding to the image frame to be displayed on content view 1 has a high duty ratio and the section corresponding to the image frame to be displayed on content view 2 has a low duty ratio.

The backlight driver 330 applies a driving signal to the light source 320 under the control of the backlight controller 340, and the light source 320 provides a backlight to a display panel (not shown) in accordance with a display timing of each image frame according to the driving signal. Accordingly, as illustrated in FIG. 7, the image frame which is displayed on content view 1 of the display screen (not shown) is displayed brighter and the image frame of contents which is displayed on content view 2 is displayed darker.

Therefore, if image frames of a plurality of contents are disposed and displayed alternately, the image frames of each content may be displayed with optimum brightness without any effect from image frames of other contents.

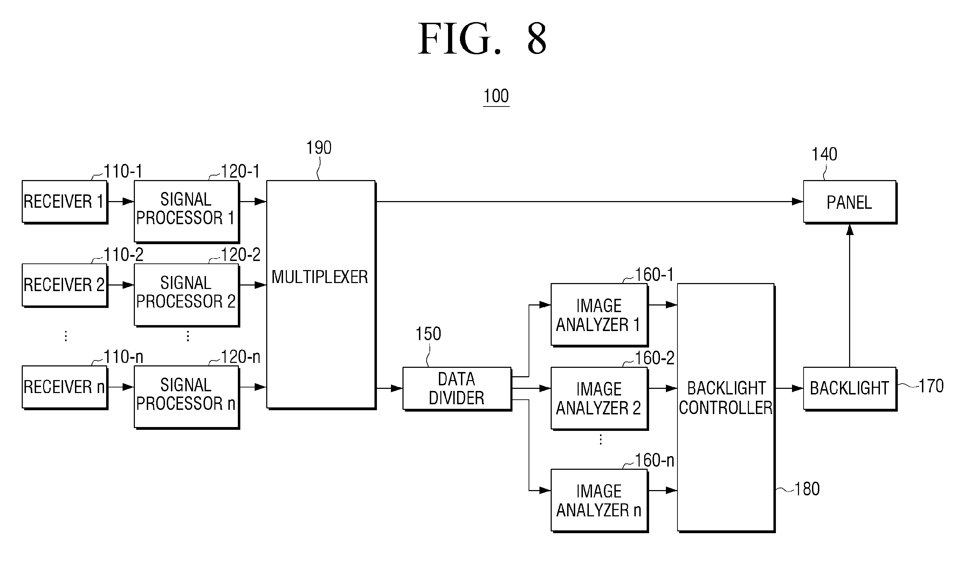

The backlight providing apparatus 300 may be included in the display apparatus 10 and then operated, and may provide a backlight to a display panel (not shown) of the display apparatus 100. The display apparatus 100 which is included in the backlight providing apparatus 300 will be explained with reference to FIG. 8.

FIG. 8 is a block diagram illustrating configuration of a display apparatus according to another exemplary embodiment. As the configuration of a display apparatus has been explained in detail with reference to FIG. 3, the explanation will be focused on the differences between the configuration of FIG. 3 and the configuration of FIG. 8.

According to FIG. 8, the display apparatus 100 comprises a plurality of receivers 110-1, 110-2, ..., 110-n, a plurality of signal processors 120-1, 120-2, ..., 120-n, a multiplexer 190, a panel 140, a data divider 150, a plurality of image analyzers 160-1, 160-2, ..., 160-n, a backlight 170, and a backlight controller 180. The display apparatus 100 may be realized as various devices such as a television, a mobile phone, a PDA, a notebook PC, a monitor, a tablet PC, an electronic book, an electronic album, and a kiosk.

The multiplexer 190 multiplexes image frames of a plurality of contents. Specifically, the multiplexer 190 may multiplex and output the image frames to be disposed alternately one by one so that the image frames of the plurality of contents which are composed by the signal processor may be disposed alternately at least one by one.

The panel 140 displays the multiplexed image frames. Accordingly, the panel 140 may display the image frames such that the image frames are multiplexed and output by the multiplexer 190 may be disposed alternately at least one by one.

Meanwhile, the panel 140 may comprise a display panel comprising a plurality of pixels to display an image frame and a panel driver (not shown) for driving a display panel under the control of the backlight controller 180.

The data divider 150 divides image frames multiplexed by the multiplexer 190 for each content view. That is, the data divider 150 may receive image frames of a plurality of contents provided to the panel unit 140, divide the image frames of each content for content view and output the divided image frames to each of the image analyzers 160-1, 160-2, ..., 160-n.

The plurality of image analyzers 160-1, 160-2, ..., 160-n detect bright properties information of each image frame which is divided for content view. The plurality of image analyzers 160-1, 160-2, .., 160-n correspond to the plurality of image analyzers 310-1, 310-2, ..., 310-n and thus, further explanation will not be provided.

The backlight 170 provides a backlight to the panel 140. Specifically, the backlight 170 may provide a backlight to a display panel (not shown) of the panel 140.

The backlight 170 may comprise a light source (not shown) to provide a backlight to a display panel (not shown) and a backlight driver (not shown) to drive a backlight (not shown). The light source and the backlight driver of the backlight 170 correspond to the light source 320 and the backlight driver 330 of the backlight providing apparatus 300, respectively, and thus, further explanation will not be provided.

The backlight controller 180 controls the backlight 170. The backlight controller 180 controls the backlight 170 to provide a backlight corresponding to brightness property information of image frames of each content view by interlocking with the operation that a plurality of content views are displayed in the panel 140. That is, the backlight controller 180 controls the backlight 170 to provide a backlight in synchronization with each content view, the backlight corresponding to the brightness property information of the image frames of each content view.

In addition, the backlight controller 180 may determine a duty ratio for each of a plurality of content views using brightness properties information of each image frame and control the backlight 170 to apply a driving signal in accordance with the determined duty ratio.

Although not illustrated in FIG. 6, the backlight controller 180 may control not only the backlight 170 but also overall operations of the display apparatus 100. Specifically, the backlight controller 180 may control each of the plurality of receivers 110-1, 110-2, ..., 110-n, the plurality of signal processors 120-1, 120-2, ..., 120-n, the multiplexer 190, the panel 140, the data divider 150, the plurality of the image analyzers 160-1, 160-2, ..., 160-n, and the backlight 170 to perform corresponding operations.

The backlight controller 180 corresponds to the controller 140 of the backlight providing apparatus 300 and thus, further explanation will not be provided.

In the above description, brightness property information regarding each of a plurality of content views is detected and a backlight corresponding to each image frame for each content view is provided. However, a backlight may be provided considering the effect of image frames of other adjacent content views. For example, if a difference of a duty ratio from an adjacent content view is greater than a preset value in the process of generating a driving signal, a determined duty ratio is changed, and a backlight may be provided by generating a driving signal according to the changed duty ratio.

In the display apparatus 100 which has been explained with reference to FIG. 8, the backlight providing apparatus 300 receives image frames which are multiplexed and divided for each content view by the data divider 150. However, the backlight providing apparatus 300 may receive image frames directly from the plurality of signal processors 120-1, 120-2, ..., 120-n, and in this case, the data divider 150 may be omitted. In addition, each of the plurality of image analyzers 160-1, 160-2, ..., 160-n may be included in the plurality of signal processors 120-1, 120-2, ..., 120-n to perform the corresponding functions or the plurality of signal processors 120-1, 120-2, ..., 120-n may perform the corresponding functions.

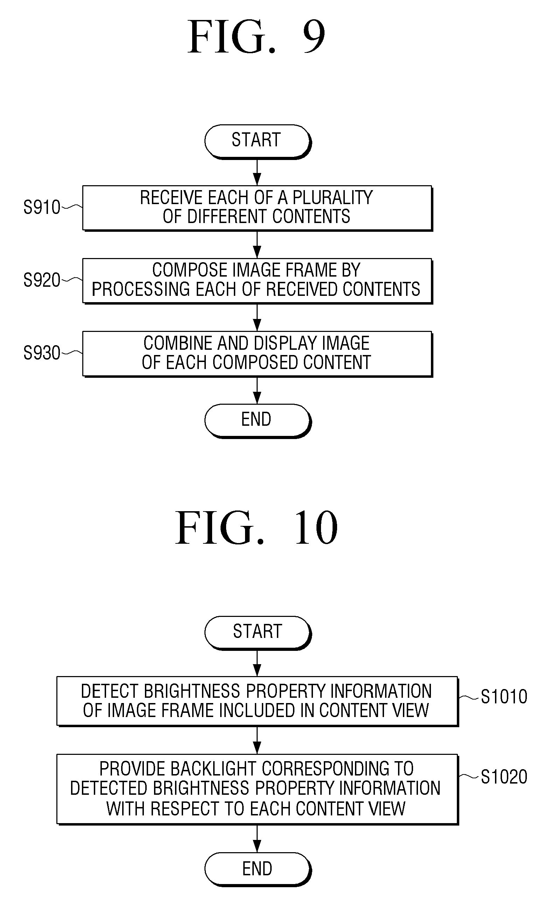

FIG. 9 is a flowchart illustrating a method for controlling a display apparatus according to an exemplary embodiment.

According to FIG. 9, the display method includes receiving each of a plurality of contents (S910). Each of the received contents is processed to compose image frames (S920). Specifically, the operation of composing image frames may include decoding image data included in the received contents and converting a frame rate of the image data. The specific method for composing image frames has been explained with reference to FIGS. 3 and 4 and thus, further description will not be provided.

Subsequently, the composed image frames of each content are combined and displayed (S930).

Accordingly, a plurality of received contents are signal-processed respectively and thus, there would be very little to no effect from other contents during the signal processing, making it possible to perform optimal signal processing.

FIG. 10 is a flowchart illustrating a controlling method of a backlight providing apparatus according to an exemplary embodiment.

According to FIG. 10, the backlight providing method according to an exemplary embodiment includes detecting brightness property information of image frames included in each content view (S1010). Specifically, if a plurality of contents which are combined by an image frame unit are input, image frames of each content are divided for each content view and brightness properties information of image frames included in each content view is detected. Subsequently, with respect to each content view, a backlight corresponding to brightness property information of each image frame is provided (S1020). Herein, the operation of providing a backlight (S1020) includes determining a duty ratio for each of a plurality of content views using brightness property information of each image frame, generating a driving signal having the determined duty ratio, and providing a backlight by applying a driving signal to a light source.

The brightness property information may be an average brightness value of pixels constituting an image frame. Meanwhile, as described above, the brightness property information is not limited to an average brightness value but may also be various values such a maximum value, a minimum value, a median value, and a mode from among brightness values of each pixel.

One or more programs for performing the methods according to various exemplary embodiments may be stored in various types of recording medium.

Specifically, program code for performing the above-mentioned methods may be stored in various types of non-volatile recording medium, such as flash memory, Read Only Memory (ROM), Erasable Programmable ROM (EPROM), Electronically Erasable and Programmable ROM (EEPROM), hard disk, removable disk, memory card, USB memory, and CD-ROM.

Although a few exemplary embodiments of the present inventive concept have been shown and described, it would be appreciated by those skilled in the art that changes may be made in the exemplary embodiments without departing from the principles and spirit of the inventive concept, the scope of which is defined in the claims and their equivalents.

## Claims

1. A backlight providing apparatus comprising:
a plurality of image analyzers which detect brightness property information of an image frame for each of a plurality of content views;
a light source which provides a backlight to a display panel;
a backlight driver which drives the light source; and
a controller which controls the backlight driver to provide a backlight corresponding to the detected brightness property information for each of the plurality of content views.

2. The apparatus as claimed in claim 1, wherein the controller determines a duty ratio for each of the plurality of content views based on brightness property information of the respective image frames and controls the backlight driver to drive the light source in accordance with the determined duty ratio.

3. The apparatus as claimed in claim 1 or 2, wherein each of the plurality of image analyzers detects an average brightness value of each pixel constituting the respective image frame of the contents as the brightness property information.

4. A method for controlling a backlight providing apparatus, the method comprising:
for a plurality of contents which are combined by image frame, dividing image frames of each of the plurality of contents into content views and detecting brightness property information of an image frame of the respective content views; and
providing a backlight corresponding to the detected brightness property information for each content view.

5. The method as claimed in claim 4, wherein the providing a backlight comprises:
determining a duty ratio for each of the plurality of contents using brightness property information of the respective image frame;
generating a driving signal having the determined duty ratio; and
providing the backlight by applying the driving signal to a backlight.

6. The method as claimed in claim 4 or 5, wherein the brightness property information of the image frame comprises an average brightness value of pixels constituting the image frame.

7. A display apparatus comprising:
a plurality of receivers which receive respective ones of a plurality of contents;
a plurality of signal processors which correspond respectively to the plurality of receivers, each of the signal processors composing an image frame by processing corresponding respective ones of the plurality of the received contents;
a multiplexer which multiplexes the image frames composed by the signal processors;
a panel which displays the multiplexed image frame;
a data divider which divides image frames of the plurality of contents provided to the panel into a plurality of content views;
a plurality of image analyzers which detect brightness property information of image frames of respective ones of the content views;
a backlight which provides a backlight to the panel; and
a controller which controls the backlight to display each of the plurality of content views in synchronization with a backlight corresponding to brightness property information of image frames of the respective content view.

8. The apparatus as claimed in claim 7, wherein the controller determines a duty ratio for each of the plurality of content views using the brightness property information of the respective image frame of the content view, and controls to apply a driving signal in accordance with the determined duty ratio to the backlight.

9. The apparatus as claimed in claim 7 or 8, wherein each of the plurality of image analyzers detects an average brightness value of each pixel constituting an image frame of the contents as the brightness properties information of the image frame.

10. The apparatus as claimed in claim 7 to 9, wherein each of the plurality of signal processors comprises:
a decoder which performs decoding with respect to image data included in received contents;
a scaler which performs scaling with respect to the decoded image data; and
a frame rate converter which converts a frame rate of the image data.

11. A display method for providing a plurality of contents to a plurality of users, the method comprising:
receiving each of a plurality of contents;
composing an image frame by processing each of the received contents; and
combining the composed image frames and outputting the image frames.

12. The method as claimed in claim 11, wherein the composing an image frame comprises:
performing decoding with respect to image data included in the received contents;
performing scaling with respect to the decoded image data; and
converting a frame rate of the image data.
